# EUROPÄISCHE PATENTSCHRIFT

(11) **EP 2 108 109 B1**
(45) Veröffentlichungstag und Bekanntmachung des Hinweises auf die Patenterteilung: **16.06.2010**
(21) Anmeldenummer: 07847671.0
(22) Anmeldetag: 03.12.2007
(51) Int. Cl.: G01L 23/22, G01L 23/18

(54) **PIEZOELEKTRISCHER KLOPFSENSOR**
PIEZOELECTRIC KNOCK SENSOR
CAPTEUR DE CLIQUETIS PIÉZOÉLECTRIQUE

(30) Priorität: 29.12.2006 DE 102006062010
(43) Veröffentlichungstag der Anmeldung: 14.10.2009
(73) Patentinhaber: Robert Bosch GmbH, 70442 Stuttgart (DE)
(72) Erfinder: BUCHHOLZ, Martin, 74321 Bietigheim-Bissingen (DE); GLOCK, Oliver, 70378 Stuttgart (DE)
(86) Internationale Anmeldenummer: PCT/EP2007/063160
(87) Internationale Veröffentlichungsnummer: WO 2008/080727

(56) Entgegenhaltungen:
- DE-A1- 4 123 786
- DE-A1- 10 327 147
- US-A- 4 450 811
- US-A- 5 935 189

## Beschreibung

### Stand der Technik

Die Erfindung betrifft einen Sensor zur Befestigung an einer Brennkraftmaschine. Speziell betrifft die Erfindung einen Sensor zur Befestigung an einer luftverdichtenden, selbstzündenden Brennkraftmaschine.

Aus der DE 41 23 786 A1 ist ein als Klopfsensor ausgestalteter Sensor zur Befestigung an einer Brennkraftmaschine bekannt. Der bekannte Sensor weist eine Druckhülse auf, an deren Außenseite eine piezokeramische' Scheibe, eine auf diese einwirkende seismische Masse, Kontakt- und Isolierscheiben angeordnet sind.

Der aus der DE 41 23 786 A1 bekannte Klopfsensor kann die charakteristischen Schwingungen von klopfenden Verbrennungen erfassen und diese in elektrische Signale umsetzen. Dabei kann der Klopfsensor als Brelubandsensor mit einem typischen Frequenzbereich von 5 bis 20 kHz ausgestaltet sein. Die Signalauswertung eines solchen Breitbandsensors kann dann innerhalb einer Auswerteschaltung oder dergleichen erfolgen.

### Offenbarung der Erfindung

Der erfindungsgemäße Sensor mit den Merkmalen des Anspruchs 1 hat den Vorteil, dass der von der Brennkraftmaschine auf den Grundkörper übertragene Körperschall und die elastische Verformung des Grundkörpers getrennt voneinander mittels des Körperschall-Sensorelements und des Dehnungs-Sensorelements erfasst werden. Dadurch können neue Funktionen zur Steuerung, Regelung oder Überwachung der Brennkraftmaschine realisiert werden.

Durch die in den abhängigen Ansprüchen aufgeführten Maßnahmen sind vorteilhafte Weiterbildungen des im Anspruch 1 angegebenen Sensors möglich.

Im montierten Zustand des Sensors kann eine Dehnung der Brennkraftmaschine im Bereich der Montagefläche des Grundkörpers des Sensors, das heißt eine elastische Verformung der Brennkraftmaschine, zumindest in gewissen Richtungen durch das Dehnungs-Sensorelement erfasst werden. Diese Dehnungen können beispielsweise während der Verdichtung von Luft oder eines Brennstoff-Luft-Gemisches in der Kammer der Brennkraftmaschine auftreten. Andererseits kann mittels des Körperschall-Sensorelements ein Körperschall erfasst werden, der beispielsweise durch die Verbrennung, das Schließen eines Ventils oder gewisse Bewegungen des Kolbens verursacht ist.

Vorteilhaft ist es, dass der Grundkörper eine Montagefläche aufweist und dass das Dehnungs-Sensorelement so ausgestaltet ist, dass seine Erfassung der elastischen Verformung des Grundkörpers in zumindest einer Erfassungsrichtung erfolgt, die zumindest näherungsweise parallel zu der Montagefläche orientiert ist. Dies hat den Vorteil, dass eine Beeinflussung des Messsignals des Dehnungs-Sensorelements durch Körperschall verringert ist, da dieser im Wesentlichen senkrecht zu der Montagefläche auf den Grundkörper übertragen wird. Dadurch kann die Zuverlässigkeit und/oder Genauigkeit der Erfassung der elastischen Verformung des Grundkörpers und somit einer Dehnung der Brennkraftmaschine verbessert werden.

Ferner ist es vorteilhaft, dass die Erfassungsrichtung in Bezug auf eine Achse des Grundkörpers, die senkrecht zu der Montagefläche orientiert ist, im Wesentlichen in einer Umfangsrichtung orientiert ist. Speziell durch eine Messung in voneinander verschiedenen Erfassungsrichtungen, die jeweils in Umfangsrichtung orientiert sind, können gewisse Verformungen des Grundkörpers zuverlässig erfasst werden. Beispielsweise kann bei einem Grundkörper mit kreisförmiger Montagefläche eine Stauchung oder Dehnung dieser Kreisfläche erfasst werden. Dies entspricht der Erfassung einer gewissen, in der Regel geringfügigen Verformung der kreisförmigen Montagefläche in eine elliptische Montagefläche. Die Erfassung solcher Dehnungen oder Stauchungen ist jedoch auch bei anders ausgestalteten Montageflächen möglich.

Vorteilhaft ist es auch, dass die Erfassungsrichtung in Bezug auf die Achse des Grundkörpers radial orientiert ist. Speziell können mehrere voneinander verschiedene Erfassungsrichtungen vorgesehen sein, in denen jeweils eine Komponente der elastischen Verformung des Grundkörpers entlang zumindest einer Erfassungsstrecke erfasst wird.

In vorteilhafter Weise ist das Körperschall-Sensorelement so ausgestaltet, dass eine Erfassungsrichtung des Körperschall-Sensorelements senkrecht zu der Montagefläche des Grundkörpers orientiert ist. Dadurch wird eine Beeinflussung des Messsignals des Körperschall-Sensorelements durch Dehnungen der Brennkraftmaschine verringert oder verhindert. Somit kann die Störimmunität und/oder die Genauigkeit des Messsignals des Körperschall-Sensorelements verbessert werden. In Kombination mit der Orientierung der Erfassungsrichtung des Dehnungs-Sensorelements parallel zu der Montagefläche ergibt sich außerdem der besondere Vorteil, dass der Körperschall und die Dehnung mit jeweils geeigneten, das heißt angepassten, Sensorelementen gemessen werden können, wobei eine unerwünschte Beeinflussung verhindert ist.

Die Messsignale des Körperschall-Sensorelements und des Dehnungs-Sensorelements können gegebenenfalls über eine gemeinsame Messleitung ausgegeben werden. Es ist jedoch auch möglich, mehrere Messleitungen vorzusehen, um die gegenseitige Beeinflussung der Messsignale weiter zu verringern und um die Auswertung zu vereinfachen, da dann ein Entmischen der Messsignale nicht erforderlich ist. Außerdem ist es auch möglich, dass mehrere Messleitungen für jede der Erfassungsstrecken oder jede der Erfassungsrichtungen des Dehnungs-Sensorelements vorgesehen sind.

Das Dehnungs-Sensorelement kann einen oder mehrere Dehnungsmessstreifen aufweisen, die in vorteilhafter Weise in ein als Isolierfolie ausgestaltetes Isolierelement eingebettet oder auf andere Weise integriert sind.

Das Dehnungs-Sensorelement kann allerdings auch ein oder mehrere piezoelektrische Elemente aufweisen, die vorzugsweise in Bezug auf die Achse des Grundkörpers radial polarisiert sind.

### Kurze Beschreibung der Zeichnungen

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigt:
Fig. 1 ein Ausführungsbeispiel eines erfindungsgemäßen Sensors in einer schematischen, axialen Schnittdarstellung;
Fig. 2 einen Schnitt durch den in Fig. 1 dargestellten Sensor entlang der mit II bezeichneten Schnittlinie und
Fig. 3 den in Fig. 2 dargestellten Schnitt entsprechend einem weiteren Ausführungsbeispiel der Erfindung.

### Ausführungsformen der Erfindung

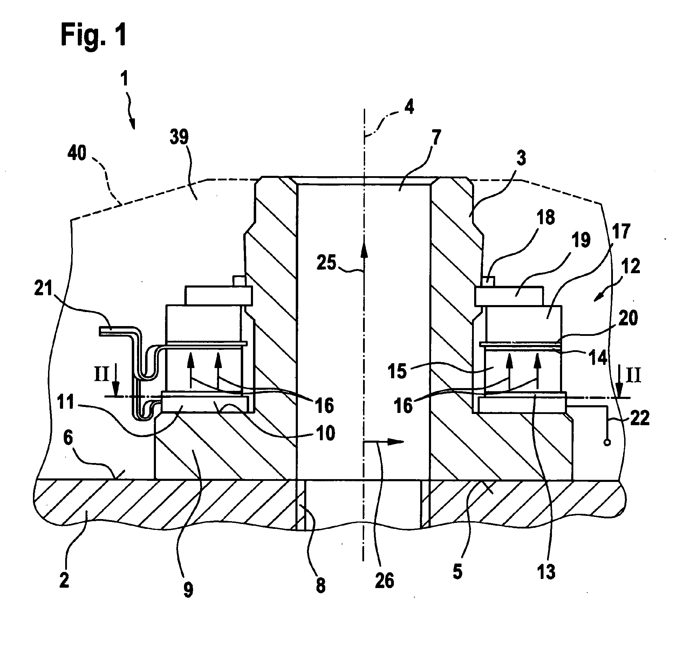

Fig. 1 zeigt ein Ausführungsbeispiel eines Sensors 1 in einer axialen Schnittdarstellung. Der Sensor 1 ist vorgesehen zur Befestigung an einer Brennkraftmaschine 2. Dabei können auch mehrere, entsprechend dem Sensor 1 ausgestaltete Sensoren vorgesehen sein, die an die Brennkraftmaschine 2 befestigt sind. Speziell eignet sich der Sensor 1 für eine luftverdichtende, selbstzündende Brennkraftmaschine 2. Der Sensor 1 kann auch als Klopfsensor für eine gemischverdichtende, fremdgezündete Brennkraftmaschine 2 dienen. Die Anzahl und die Anbauposition der erforderlichen Sensoren 1 ist an den jeweiligen Anwendungsfall, insbesondere den Typ der Brennkraftmaschine 2, angepasst. Der Sensor 1 eignet sich jedoch auch für andere Anwendungsfälle.

Der Sensor 1 weist einen als Druckhülse ausgestalteten Grundkörper 3 auf, der bezüglich einer Achse 4 des Grundkörpers 3 radial symmetrisch ausgebildet ist. Der Grundkörper 3 weist eine Montagefläche 5 auf, die im montierten Zustand des Sensors 1 unmittelbar an einer Anlagefläche 6 der Brennkraftmaschine 2 anliegt. Die Befestigung des Sensors 1 kann mittels geeigneter Befestigungsmittel (nicht dargestellt) erfolgen. Beispielsweise kann ein Befestigungsmittel durch eine axiale Durchgangsbohrung 7 des Grundkörpers 3 hindurchgreifen und in eine Gewindebohrung 8 der Brennkraftmaschine 2 eingeschraubt sein. Im montierten Zustand des Sensors 1 verläuft die Achse 4 des Grundkörpers 3 zumindest näherungsweise mittig durch die Gewindebohrung 8. Ferner steht die Achse 4 des Grundkörpers 3 sowohl senkrecht zu der Montagefläche 5 des Grundkörpers 3 als auch senkrecht zu der Anlagefläche 6 der Brennkraftmaschine 2.

Der Grundkörper 3 weist eine an einem Absatz 9 ausgebildete Auflagefläche 10 auf, auf der ein Dehnungs-Sensorelement 11 aufliegt. Ferner liegt auf dem Dehnungs-Sensorelement 11 ein Körperschall-Sensorelement 12 auf, das einen ersten Kontaktring 13, einen zweiten Kontaktring 14 und ein piezoelektrisches Element 15 umfasst, das zwischen den Kontaktringen 13, 14 angeordnet ist. Das piezoelektrische Element 15 ist dabei in Richtung der Achse 4 polarisiert, wie es durch die Pfeile 16 veranschaulicht ist. Ferner ist eine seismische Masse 17 vorgesehen, die mittels einer durch ein Halteelement 18 fixierten Tellerfeder 19 gegen das mittelbar an dem Absatz 9 abgestützte Körperschall-Sensorelement 12 beaufschlagt ist, wobei zwischen dem zweiten Kontaktring 14 des Körperschall-Sensorelements 12 und der seismischen Masse 17 eine Isolierscheibe 20 vorgesehen ist. Die Kontaktringe 13, 14 sind mit einer elektrischen Messleitung 21 verbunden, um die von dem piezoelektrischen Element 15 erzeugte Messladung von dem Sensor 1 zu einer geeigneten Auswerteschaltung zu führen. Ferner ist eine weitere elektrische Messleitung 22 vorgesehen, die mit dem Dehnungs-Sensorelement 11 verbunden ist, um das von dem Dehnungs-Sensorelement 11 erzeugte Messsignal von dem Sensor 1 zu der Auswerteschaltung zu führen.

Das Körperschall-Sensorelement 12 weist eine Erfassungsrichtung 25 auf, die entlang der Achse 4 orientiert ist. Dabei ist das piezoelektrische Element 15 so ausgelegt, dass Beaufschlagungen senkrecht zu der Erfassungsrichtung 25 keine oder nur geringfügige Auswirkungen auf das erzeugte Messsignal haben.

Das Dehnungs-Sensorelement 11 ist so ausgestaltet, dass zumindest eine Erfassungsrichtung 26 parallel zu der Montagefläche 5 und somit senkrecht zu der Achse 4 des Grundkörpers 3 orientiert ist. Dabei erzeugt das Dehnungs-Sensorelement 11 ein Messsignal, das durch eine Beaufschlagung in Richtung der Achse 4 nicht oder nur geringfügig beeinflusst ist. Die Empfindlichkeit des Dehnungs-Sensorelements 11 ist daher im Wesentlichen auf Dehnungen gerichtet, die parallel zu der Montagefläche 5 und somit der Anlagefläche 6 verlaufen, wobei die Empfindlichkeit auf eine oder mehrere bestimmte Erfassungsrichtungen 26 beschränkt sein kann, die parallel zu der Montageflache 5 orientiert sind.

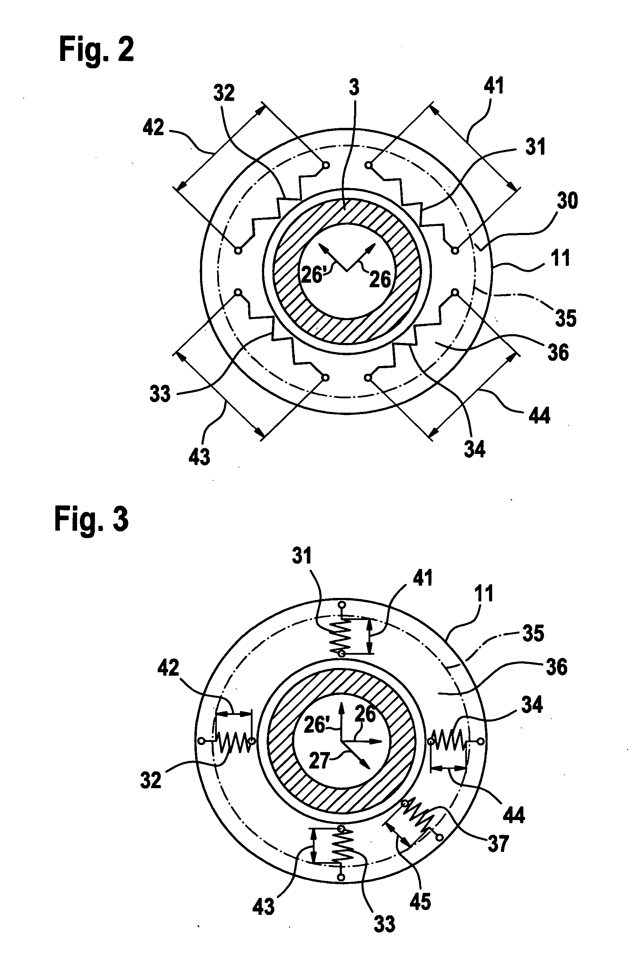

Durch die Befestigung des Grundkörpers 3 des Sensors 1 an der Brennkraftmaschine 2 besteht über die gesamte Verbindungsfläche zwischen der Montagefläche 5 und der Anlagefläche 6 eine kraftschlüssige Verbindung, so dass Dehnungen der Brennkraftmaschine 2, die sich in einer in der Regel geringfügigen Streckung der Anlagefläche 6 in zumindest einer Richtung auswirken, zu Verformungen des Grundkörpers 3, ausgehend von der Montagefläche 5 führen. Diese Verformungen des Grundkörpers 3 übertragen sich zumindest teilweise auf das Dehnungs-Sensorelement 11. Die Erfassung dieser Dehnungen ist nachfolgend anhand der Fig. 2 im Detail weiter beschrieben.

Fig. 2 zeigt einen Schnitt durch den in Fig. 1 dargestellten Sensor 1 entlang der mit II bezeichneten Schnittlinie. Das Dehnungs-Sensorelement 11 weist ein Isolierelement 30 auf, das als Isolierfolie ausgestaltet ist. In das Isolierelement 30 sind Dehnungs-Messstreifen 31, 32, 33, 34 eingebettet, die im Wesentlichen in einer Umfangsrichtung bezüglich der Achse 4 des Grundkörpers 3 angeordnet sind, so dass durch die Dehnungsmessstreifen 31, 32, 33, 34 definierte Erfassungsstrecken 41, 42, 43, 44, die bezüglich der Achse 4 des Grundkörpers 3 paarweise um 90° versetzt zueinander liegen, in Umfangsrichtung orientiert sind. Ferner ist durch eine strichpunktierte Linie 35 ein Erfassungsbereich nach außen abgegrenzt, wobei der Erfassungsbereich 36 in Bezug auf die Ausdehnung der Montagefläche 5 definiert ist. Außerhalb des Erfassungsbereichs 36 ergeben sich nur geringfügige oder keine Verformungen des Isolierelements 30 des Dehnungs-Sensorelements 11 bei entsprechenden Dehnungen der Brennkraftmaschine 2. Daher sind die Dehnungsmessstreifen 31, 32, 33, 34 und die durch diese definierten Erfassungsstrecken 41, 42, 43, 44, entlang derer Dehnungen und Stauchungen des Grundkörpers 3 mittels des Dehnungs-Sensorelements 11 erfassbar sind, vorzugsweise innerhalb des Erfassungsbereichs 36 des Isolierelements 30 angeordnet.

In dem dargestellten Ausführungsbeispiel sind vier Dehnungsmessstreifen 31 bis 34 vorgesehen, die so angeordnet sind, dass Streckungen oder Stauchungen des Isolierelements 30 primär in den Erfassungsrichtungen 26, 26' erfasst werden. Streckungen beziehungsweise Stauchungen des Isolierelements 30 in anderen Richtungen als den Erfassungsrichtungen 26, 26' des Dehnungs-Sensorelements 11 können allerdings durch eine Kombination der durch die Dehnungsmessstreifen 31 bis 34 momentan gegebenen Widerstandswerte erhalten werden. Insbesondere können die Dehnungsmessstreifen 31 bis 34 zusammengeschaltet werden, wobei Parallel- und/oder Reihenschaltungen möglich sind, um die Anzahl der Signalleitungen der Messleitung 22 zu verringern. Die Kombination der durch die Dehnungsmessstreifen 31 bis 34 gegebenen Messwerte kann allerdings auch erst in der Auswerteschaltung erfolgen.

Fig. 3 zeigt den in Fig. 2 gezeigten Schnitt durch einen Sensor 1 entsprechend einem weiteren Ausführungsbeispiel der Erfindung. In diesem Ausführungsbeispiel sind die Dehnungsmessstreifen 31 bis 34 in Bezug auf die Achse 4 des Grundkörpers 3 jeweils in einer radialen Richtung angeordnet. Die durch die Dehnungsmessstreifen 31 bis 34 definierten Erfassungsstrecken 41 bis 44 sind somit ebenfalls radial orientiert. Dadurch ergeben sich primär die Erfassungsrichtungen 26, 26'. Außerdem ist auf Grund der radialen Anordnung der Dehnungsmessstreifen 31 bis 34 eine kompakte Anordnung der Dehnungsmessstreifen 31 bis 34 möglich, so dass weitere Dehnungsmessstreifen vorgesehen sein können. In der Fig. 3 ist exemplarisch ein weiterer Dehnungsmessstreifen 37 vorgesehen, so dass eine zusätzliche Erfassungsstrecke 45 mit einer zusätzlichen Erfassungsrichtung 27 des Dehnungs-Sensorelements 11 in radialer Richtung besteht.

Eine alternative Ausgestaltung des Dehnungs-Sensorelements 11, das in der Fig. 1 dargestellt ist, ist durch zumindest ein piezoelektrisches Element möglich, das in Bezug zu der Achse 4 des Grundkörpers 3 radial oder in zumindest einer Erfassungsrichtung 26, die parallel zu der Montagefläche 5 orientiert ist, polarisiert ist.

Durch den Sensor 1 können getrennt voneinander und gleichzeitig Dehnungen der Brennkraftmaschine 2 durch das Dehnungs-Sensorelement 11 und verursachter Körperschall durch das Körperschall-Sensorelement 12 erfasst werden. Dabei können die Sensorelemente 11, 12 an die jeweils erfassten Größen angepasst werden, wobei insbesondere unterschiedliche Empfindlichkeiten der Sensorelemente 11, 12 vorgegeben sein können. Durch die Kombination der beiden Sensorelemente 11, 12 in einem Sensor 1 wird außerdem der Montageaufwand und die Anzahl der benötigten Anlageflächen 6 an der Brennkraftmaschine 2 optimiert. Die Sensorelemente 11, 12 können jeweils passiv oder aktiv ausgeführt werden. Außerdem ist vorzugsweise eine Ummantelung 39 des Sensors 1 vorgesehen, die durch die unterbrochen dargestellte Linie 40 veranschaulicht ist.

Die Erfindung ist nicht auf die beschriebenen Ausführungsbeispiele beschränkt.

## Patentansprüche

1. Sensor (1) zur Befestigung an einer Brennkraftmaschine (2) mit einem Grundkörper (3) und einem Körperschall-Sensorelement (12), das zum Erfassen eines von der Brennkraftmaschine (2) auf den Grundkörper (3) übertragenen Körperschalls dient,
**dadurch gekennzeichnet,**
**dass** ein Dehnungs-Sensorelement (11) vorgesehen ist, das zum Erfassen einer elastischen Verformung des Grundkörpers (3) dient.

2. Sensor nach Anspruch 1,
**dadurch gekennzeichnet,**
**dass** der Grundkörper (3) eine Montagefläche (5) aufweist und dass das Dehnungs-Sensorelement (11) so ausgestaltet ist, dass eine Erfassung der elastischen Verformung des Grundkörpers (3) in zumindest einer Erfassungsrichtung (26) entlang einer Erfassungsstrecke (42, 44) erfolgt, die zumindest näherungsweise parallel zu der Montagefläche (5) orientiert ist.

3. Sensor nach Anspruch 2,
**dadurch gekennzeichnet,**
**dass** die Erfassungsstrecke (42, 44) des Dehnungs-Sensorelements (11) in Bezug auf eine Achse (4) des Grundkörpers (3), die zumindest näherungsweise senkrecht zu der Montagefläche (5) orientiert ist, zumindest im Wesentlichen in einer Umfangsrichtung orientiert ist.

4. Sensor nach Anspruch 2,
**dadurch gekennzeichnet,**
**dass** die Erfassungsrichtung (26) der Erfassungsstrecke (42, 44) in Bezug auf eine Achse (4) des Grundkörpers (3), die zumindest näherungsweise senkrecht zu der Montagefläche (6) orientiert ist, zumindest im Wesentlichen radial orientiert ist.

5. Sensor nach einem der Ansprüche 2 bis 4,
**dadurch gekennzeichnet,**
**dass** das Körperschall-Sensorelement (12) so ausgestaltet ist, dass eine Erfassungsrichtung (25) des Körperschall-Sensorelements (12) zumindest näherungsweise senkrecht zu der Montagefläche (5) des Grundkörpers (3) orientiert ist.

6. Sensor nach Anspruch 5,
**dadurch gekennzeichnet,**
**dass** das Körperschall-Sensorelement (12) zumindest ein piezoelektrisches Element aufweist, das zumindest näherungsweise senkrecht zu der Montagefläche (5) des Grundkörpers (3) polarisiert ist.

7. Sensor nach einem der Ansprüche 1 bis 6,
**dadurch gekennzeichnet,**
**dass** das Dehnungs-Sensorelement (11) zumindest einen Dehnungsmessstreifen (31, 32, 33, 34, 37) aufweist.

8. Sensor nach Anspruch 7,
**dadurch gekennzeichnet,**
**dass** ein Isolierelement (30) vorgesehen ist, das zum Isolieren des Körperschall-Sensorelements (12) gegenüber dem Grundkörper (3) dient und dass der Dehnungsmessstreifen (31, 32, 33, 34, 37) in das Isolierelement (30) integriert ist.

9. Sensor nach Anspruch 8,
**dadurch gekennzeichnet,**
**dass** das Isolierelement (30) als Isolierfolie ausgestaltet ist.

10. Sensor nach einem der Ansprüche 1 bis 6,
**dadurch gekennzeichnet,**
**dass** das Dehnungs-Sensorelement (11) zumindest ein piezoelektrisches Element (11) aufweist, das in Bezug zu einer Achse (4) des Grundkörpers (3), die senkrecht zu einer Montagefläche (5) des Grundkörpers (3) orientiert ist, radial polarisiert ist.

## Claims

1. Sensor (1) for fastening to an internal combustion engine (2), having a basic body (3) and a structure-borne noise sensor element (12) which is used to detect structure-borne noise transmitted from the internal combustion engine (2) to the basic body (3),
**characterized in that**
a strain sensor element (11) which is used to detect elastic deformation of the basic body (3) is provided.

2. Sensor according to Claim 1,
**characterized in that**
the basic body (3) has a mounting surface (5), and **in that** the strain sensor element (11) is configured in such a manner that the elastic deformation of the basic body (3) is detected in at least one detection direction (26) along a detection path (42, 44) which is oriented at least approximately parallel to the mounting surface (5).

3. Sensor according to Claim 2,
**characterized in that**
the detection path (42, 44) of the strain sensor element (11) is oriented at least essentially in a circumferential direction with respect to an axis (4) of the basic body (3), which axis is oriented at least approximately perpendicular to the mounting surface (5).

4. Sensor according to Claim 2,
**characterized in that**
the detection direction (26) of the detection path (42, 44) is oriented at least essentially radially with respect to an axis (4) of the basic body (3), which axis is oriented at least approximately perpendicular to the mounting surface (5).

5. Sensor according to one of Claims 2 to 4,
**characterized in that**
the structure-borne noise sensor element (12) is configured in such a manner that a detection direction (25) of the structure-borne noise sensor element (12) is oriented at least approximately perpendicular to the mounting surface (5) of the basic body (3).

6. Sensor according to Claim 5,
**characterized in that**
the structure-borne noise sensor element (12) has at least one piezoelectric element which is polarized at least approximately perpendicular to the mounting surface (5) of the basic body (3).

7. Sensor according to one of Claims 1 to 6,
**characterized in that**
the strain sensor element (11) has at least one strain gauge (31, 32, 33, 34, 37).

8. Sensor according to Claim 7,
**characterized in that**
an insulating element (30) which is used to insulate the structure-borne noise sensor element (12) from the basic body (3) is provided, and **in that** the strain gauge (31, 32, 33, 34, 37) is integrated in the insulating element (30).

9. Sensor according to Claim 8,
**characterized in that**
the insulating element (30) is in the form of an insulating film.

10. Sensor according to one of Claims 1 to 6,
**characterized in that**
the strain sensor element (11) has at least one piezoelectric element (15) which is polarized radially with respect to an axis (4) of the basic body (3), which axis is oriented perpendicular to a mounting surface (5) of the basic body (3).

## Revendications

1. Détecteur (1) destiné à être fixé sur un moteur à combustion interne (2) et présentant un corps de base (3) ainsi qu'un élément (12) de détection des bruits matériels qui sert à détecter un bruit matériel transmis par le moteur à combustion interne (2) au corps de base (3),
**caractérisé en ce que**
un élément (11) de détection d'allongement est prévu pour servir à détecter une déformation élastique du corps de base (3).

2. Détecteur selon la revendication 1, **caractérisé en ce que** le corps de base (3) présente une surface de montage (5) et **en ce que** l'élément (11) de détection d'allongement est configuré de manière à réaliser une détection de la déformation élastique du corps de base (3) dans au moins une direction de détection (26) le long d'un parcours de détection (42, 44) qui est orienté au moins approximativement en parallèle à la surface de montage (5).

3. Détecteur selon la revendication 2, **caractérisé en ce que** le parcours de détection (42, 44) de l'élément (11) de détection d'allongement est orienté au moins essentiellement dans la direction périphérique par rapport à un axe (4) du corps de base (3) orienté au moins approximativement à la perpendiculaire de la surface de montage (5).

4. Détecteur selon la revendication 2, **caractérisé en ce que** le dispositif de détection (26) du parcours de détection (42, 44) est orienté au moins essentiellement radialement par rapport à un axe (4) du corps de base (3) est orienté au moins approximativement à la perpendiculaire de la surface de montage (5).

5. Détecteur selon l'une des revendications 2 à 4, **caractérisé en ce que** l'élément (12) de détection du bruit matériel est configuré de telle sorte que la direction de détection (25) de l'élément (12) du bruit matériel est orientée au moins approximativement à la perpendiculaire de la surface de montage (5) du corps de base (3).

6. Détecteur selon la revendication 5, **caractérisé en ce que** l'élément (12) de détection du bruit matériel présente au moins un élément piézoélectrique qui est polarisé au moins approximativement à la perpendiculaire de la surface de montage (5) du corps de base (3).

7. Détecteur selon l'une des revendications 1 à 6, **caractérisé en ce que** l'élément (11) de détection d'allongement présente au moins un ruban de mesure d'allongement (31, 32, 33, 34, 37).

8. Détecteur selon la revendication 7, **caractérisé en ce qu'**il présente un élément isolant (30) qui sert à isoler l'élément (12) de détection du bruit matériel vis-à-vis du corps de base (3) et **en ce que** le ruban (31, 32, 33, 34, 37) de mesure d'allongement est intégré dans l'élément isolant (30).

9. Détecteur selon la revendication 8, **caractérisé en ce que** l'élément isolant (30) est configuré sous la forme d'une feuille isolante.

10. Détecteur selon l'une des revendications 1 à 6, **caractérisé en ce que** l'élément (11) de détection d'allongement présente au moins un élément piézoélectrique (15) qui est polarisé radialement par rapport à un axe (4) du corps de base (3) qui est orienté perpendiculairement à la surface de montage (5) du corps de base (3).
